# EUROPÄISCHE PATENTSCHRIFT

(11) **EP 1 559 995 B1**
(45) Veröffentlichungstag und Bekanntmachung des Hinweises auf die Patenterteilung: **02.09.2009**
(21) Anmeldenummer: 05100015.6
(22) Anmeldetag: 04.01.2005
(51) Int. Cl.: G01C 21/36

(54) **Verfahren zur Navigation eines Fahrzeugs**
Method for vehicle navigation
Procédé pour la navigation d'un véhicule

(30) Priorität: 02.02.2004 DE 102004005070
(43) Veröffentlichungstag der Anmeldung: 03.08.2005
(73) Patentinhaber: ROBERT BOSCH GMBH, 70442 Stuttgart (DE)
(72) Erfinder: Mezger, Siegfried, 70563, Stuttgart (DE); Kauff, Helmut, 75196, Remchingen (DE)

(56) Entgegenhaltungen:
- EP-A- 1 063 494
- WO-A-00/40930
- DE-A1- 10 010 608
- DE-A1- 10 029 198
- DE-A1- 19 947 506
- US-A1- 2003 009 280

## Beschreibung

### Stand der Technik

Die Erfindung geht aus von einem Verfahren zur Fahrzeugnavigation nach der Gattung des Anspruchs 1. Es sind schon Navigationssysteme in Kraftfahrzeugen bekannt, die z.B. in die Mittelkonsole des Kraftfahrzeugs eingebaut sind. Diesen Navigationssystemen steht eine Datenbasis, z.B. in Form eines Straßenkartenspeichers, auf einer CD-ROM und eine Rechenvorrichtung zur Routenberechnung zur Verfügung. Die für die Berechnung der Fahrtroute erforderliche Datenbasis muss im Fahrzeug mitgeführt und gegebenenfalls regelmäßig aktualisiert werden. Ferner sind im Fahrzeug eingebaute Geräte bekannt, mittels denen eine Fahrtroute von einer Datenzentrale abgefragt und an das Gerät im Fahrzeug übertragen wird. Auch ein solches Gerät muss in das Fahrzeug eingebaut werden. Um einen festen Einbau zu umgehen, sind tragbare Geräte bekannt, die aus dem Fahrzeug entnommen werden können, für deren Abringung im Fahrzeug jedoch eine Halterung erforderlich ist. Aus der DE 199 47 506 A1 ist ferner ein Kombiinstrument mit Navigation bekannt, bei dem ein Navigationsmodul mit einem Navigationsprozessor und einem Speicher für die Navigationsberechnung in Form einer Memory Card in ein Fahrzeug eingebaut ist.

Aus der DE 100 10 608 A1 ist ein Off-Bord-Navigationssystem für ein Kraftfahrzeug bekannt, bei dem eine Fahrtroute mit Abbiegepunkten von einer Zentralstelle außerhalb des Fahrzeugs an ein Fahrzeug übertragen und in dem Fahrzeug sowohl über eine optische, als auch über eine akustische Ausgabeeinheit ausgegeben wird.

Aus der EP 1063494 is ein zweiteiliges Navigationssystem für ein Kraftfahrzeug bekannt, wobei Fahrtroutendaten über eine tragbare Vorrichtung von einer Zentralstelle außerhalb des Fahrzeugs an das Fahrzeug übertragen werden. Obwohl die Bordvorrichtung eine Anzeige aufweist, werden berechnete Fahrhinweise auf der Anzeige der tragbaren Vorrichtung dargestellt.

### Vorteile der Ereindung

Das erfindungsgemäße Verfahren zur Fahrzeugnavigation hat demgegenüber den Vorteil, dass im Fahrzeug eine Navigationsfunktion bereitgestellt werden kann, ohne bauliche Veränderungen im Fahrzeug vornehmen zu müssen, da die Berechnung und die Ausgabe von Fahrhinweisen über das Kombinationsinstrument im Fahrzeug erfolgt, wobei das Kombinationsinstrument auch für die Ausgabe einer Vielzahl anderer Informationen an den Fahrer, z.B. der aktuellen Fahrzeuggeschwindigkeit, verwendet werden kann. Weitere Ausgabeeinheiten im Fahrzeug sind nicht erforderlich. Dabei wird eine Fahrtroute auf Basis aktueller Daten in der Dienstezentrale ermittelt. Da eine Recheneinheit in einem Kombinationsinstrument im Fahrzeug bereits so ausgelegt sein kann, dass eine Funktion zur Erzeugung von Fahrhinweisen mit übernommen werden kann, ist eine entsprechende Fahrzeugnavigationsfunktion leicht und preisgünstig nachrüstbar. Auf ein aufwändiges Datenträgerlaufwerk für einen Datenträger mit Navigationsdaten kann verzichtet werden.

Erfindungsgemäß wird eine Übertragung der Fahrtroutendaten durch eine Mobilfunkvorrichtung von der Dienstezentrale angefordert. Denn eine Mobilfunkvorrichtung insbesondere in der Form eines tragbaren Mobiltelefons weist bereits eine entsprechende Eingabeeinheit auf, mit der ansonsten Telefonnummern eines Benutzers eingegeben oder sonstige Funktionen der Mobilfunkvorrichtung gesteuert werden. Daher ist es nicht mehr erforderlich, eine gesonderte Benutzerschnittstelle im Fahrzeug zur Anforderung einer Fahrtroute von der Dienstezentrale vorzusehen. In einem weiteren Ausführungsbeispiel kann die Mobilfunkvorrichtung auch dazu verwendet werden, die Navigationsfunktionen in dem Kombinationsinstrument zu steuern. Alternativ oder ergänzend ist es auch möglich, die Navigationsfunktionen durch Bedienelemente im Fahrzeug, z.B. durch am Lenkrad angeordnete Bedienelemente, zu steuern.

Durch die in den abhängigen Ansprüchen aufgeführten Maßnahmen sind vorteilhafte Weiterbildungen und Verbesserungen des im Anspruch 1 angegebenen Verfahrens zur Fahrzeugnavigation möglich. Es ist vorteilhaft, die von der Dienstezentrale ermittelten Fahrtroutendaten zunächst an die Mobilfunkvorrichtung zu übertragen und die Fahrtroutendaten anschließend von der Mobilfunkvorrichtung an das Kombinationsinstrument zu übertragen. Dies kann durch eine Kabelverbindung erfolgen, wobei das Mobilfunktelefon mit dem Kombinationsinstrument über eine geeignete Drahtschnittstelle verbunden wird. In einer bevorzugten Ausführungsform erfolgt jedoch die Übertragung über eine drahtlose Schnittstelle, insbesondere über eine Blue-Tooth-Schnittstelle. Die Blue-Tooth-Schnittstelle ist entweder an dem Kombinationsinstrument 1 unmittelbar angeordnet oder an anderer Stelle im Fahrzeug vorgesehen, wobei die Blue-Tooth-Schnittstelle dann mit dem Kombinationsinstrument 1 verbunden wird. Durch eine drahtlose Verbindung kann auf eine gesonderte Halterung zur Herstellung einer Steckerverbindung zwischen der Mobilfunkvorrichtung und dem Kombinationsinstrument im Fahrzeug verzichtet werden. Durch eine indirekte Übertragung der Fahrtroutendaten von der Dienstezentrale über die Mobilfunkvorrichtung und die zugehörige Schnittstelle ist eine Anordnung einer Mobilfunkschnittstelle im Kombinationsinstrument überflüssig. Vielmehr kann ein Benutzer für die Herstellung einer Mobilfunkvorrichtung sein Mobilfunktelefon verwenden. Gegebenenfalls kann auch eine Autotelefonvorrichtung verwendet werden, die mit entsprechend stärkerer Send- und Empfangsleistung arbeiten kann, als ein vom Fahrer verwendetes, tragbares Mobiltelefon.

Ferner ist es vorteilhaft, zusammen mit den Fahrtroutendaten weitere Navigationsdaten, insbesondere Straßenkartendaten, an das Kombinationsinstrument zu übertragen. Hierdurch kann für den Fall, dass das Fahrzeug die Fahrtroute verlässt, entweder eine alternative Fahrtroute durch das Kombinationsinstrument berechnet werden, oder der Fahrer des Fahrzeugs wird durch entsprechende Fahranweisungen auf die ursprüngliche Fahrtroute von dem Kombinationsinstrument zurückgeführt. Geringfügige Abweichungen, wie z.B. ein falsches Abbiegen oder ein Ausweichen um eine Verkehrsstauung herum, können daher von dem Kombinationsinstrument durch die Ausgabe entsprechender Fahranweisungen ausgeglichen werden, ohne dass eine Funkverbindung zu der Dienstezentrale aufgebaut werden muss.

Ferner ist es vorteilhaft, das Kombinationsinstrument mit einer Ortungseinheit auszustatten, durch die eine Bestimmung einer aktuellen Fahrzeugposition ermöglicht wird. Die Ortungseinheit kann z.B. als ein Satellitenortungssystem und/oder als eine physikalische Ortungsbestimmung mittels Wege- und/oder Drehrichtungsbestimmung erfolgen. In einer bevorzugten Ausführungsform weist das Kombinationsinstrument eine Schnittstelle zum Anschließen einer Ortungseinheit, z.B. zum Einstecken einer GPS-Ortungseinheit auf. In dem das Kombinationsinstrument die aktuelle Position des Fahrzeugs bestimmen kann, ist es möglich, die Fahranweisungen an den Fahrer ortsabhängig auszugeben. Damit können z.B. Abbiegehinweise kurz vor Erreichen einer Kreuzung ausgegeben werden, an der ein Fahrer eine gerade benutzte Straße verlassen muss.

Ferner ist es vorteilhaft, in der Mobilfunktelefoneinrichtung einen Speicher vorzusehen, in dem mögliche Fahrziele abgelegt werden können. Durch die Eingabeeinheit des Mobilfunktelefons können diese Fahrziele, z.B. durch eine Nummernzuordnung oder durch eine Auswahl aus einer Liste, auf einfache Weise ausgewählt werden, ohne dass z.B. eine Eingabe einer Buchstabenfolge oder eine Spracheingabe eines Ganzwortnamens eines Fahrziels durchgeführt werden müssen. Insbesondere ist es damit auch möglich, komplexe Fahrziele, z.B. eine Verbindung von Stadt, Straße und Hausnummer unmittelbar durch eine einzige Auswahl als Fahrziel einzugeben. Ferner ist es damit auch möglich, gegebenenfalls sogar räumlich getrennt von dem Kombinationsinstrument und dem Fahrzeug eine Fahrtroute von der Dienstezentrale anzufordern, indem ein Startpunkt und ein Fahrziel eingegeben und von der Dienstezentrale angefordert werden. Die Übertragung der Fahrtroute der Dienstezentrale erfolgt dann entweder unmittelbar an eine Mobilfunkvorrichtung des Kombinationsinstruments oder an das Mobilfunktelefon selbst, wobei bei einer Verbindung des Mobilfunktelefons mit dem Kombinationsinstrument, entweder über eine drahtgebundene oder über eine drahtlose Verbindung, die Fahrtroutendaten an das Kombinationsinstrument übertragen werden.

### Zeichnung

Ausführungsbeispiele der Erfindung sind in der Zeichnung dargestellt und in der nachfolgenden Beschreibung näher erläutert.

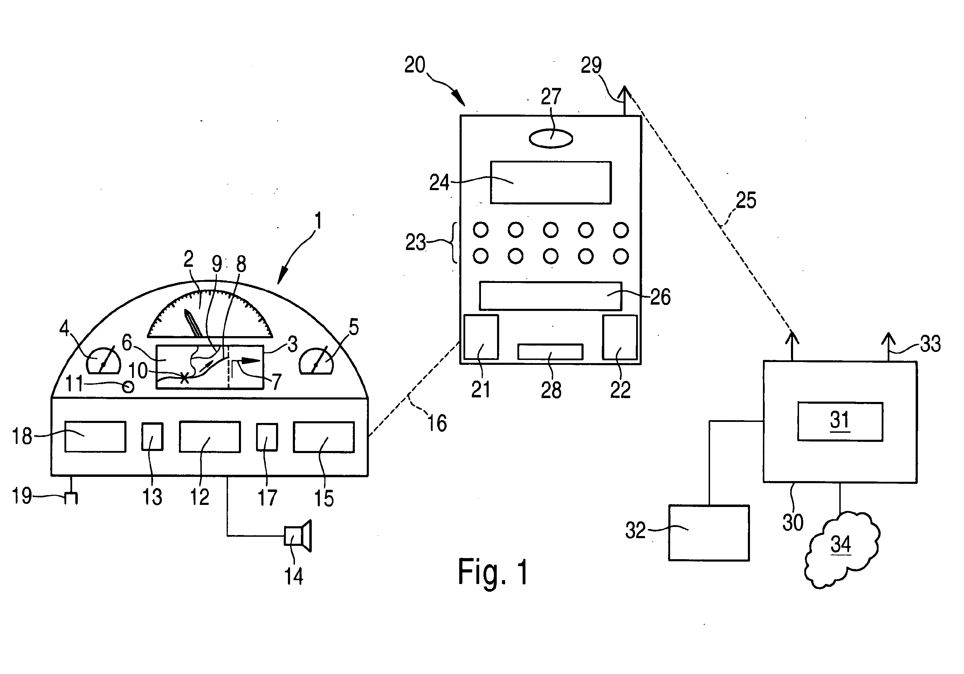

Figur 1 zeigt ein erfindungsgemäßes Kombinationsinstrument in einer drahtlosen Verbindung mit einem erfindungsgemäßen Mobilfunktelefon, das wiederum in Funkverbindung mit einer Dienstezentrale steht. Anhand dieser gezeigten, zumindest zeitweise in Verbindung stehenden Geräte wird im Folgenden das erfindungsgemäße Verfahren erläutert.

### Beschreibung des Ausführungsbeispiels

Das erfindungsgemäße Navigationsverfahren kann für beliebige Fahrzeuge verwendet werden. Im Folgenden wird das erfindungsgemäße Navigationsverfahren am Beispiel einer Anwendung in einem Kraftfahrzeug erläutert. Eine Verwendung in einem Kraftfahrzeug ist deshalb vorteilhaft, da in einem Kraftfahrzeug nur ein geringer Platz für den Einbau der Navigationsfunktion benötigt wird, weil im allgemeinen ein Kombinationsinstrument im Fahrzeug bereits vorhanden ist.

In der Figur 1 ist ein Kombinationsinstrument 1 dargestellt, das eine Geschwindigkeitsanzeige 2, eine flächige Anzeige 3 und Zeigerinstrumente 4, 5 aufweist, die z.B. der Anzeige eines Tankfüllstands, einer Kühlwassertemperatur oder der Uhrzeit dienen. Die flächige Anzeige 3, die z.B. als eine Flüssigkristallanzeige oder als eine andere matrixförmige Anzeige ausgeführt ist, dient im allgemeinen der Anzeige von zusätzlichen Fahrzeugsinformationen, z.B. der Anzeige von Bordcomputerdaten, wie z.B. der Ausgabe einer Durchschnittsgeschwindigkeit, eines Kraftstoffverbrauchs oder einer Fahrtdauer. Die dargestellten Informationen sind durch eine Bedienung seitens des Fahrers auswählbar, z.B. durch eine Betätigung einer Drucktaste 11.

Die flächige Anzeige 3 dient erfindungsgemäß der Darstellung von Fahranweisungen. In einer ersten Ausführungsform ist hierzu eine Kartendarstellung 6 in der flächigen Anzeige 3 angezeigt. Eine Fahrtroute 8, die an das Kombinationsinstrument 1 übertragen wurde, ist hervorgehoben, vorzugsweise farblich abgesetzt, gegenüber übrigen Straßen 9 in der Kartendarstellung 6 angezeigt. Ferner ist eine aktuelle Fahrzeugposition 10 auf der Fahrtroute dargestellt. Der Fahrer kann sich somit anhand der Kartendarstellung und der aktuellen Fahrzeugposition 10 dahingehend orientieren, welche Straße er wählen muss. Statt dessen oder ergänzend ist es möglich, Richtungspfeile 7 in der flächigen Anzeige darzustellen, die einem Fahrer anzeigen, wann er die aktuelle Straße verlassen muss, indem er von der befahrenen Straße in eine vorgegebene, durch die Richtungspfeile 7 angegebene Richtung abbiegt. Die Richtungspfeile 7 können durch in der Zeichnung nicht dargestellte Entfernungsangaben, die auf die Entfernung zu dem jeweiligen Abbiegepunkt hinweisen, ergänzt werden. Aus den übertragenen Fahrtroutendaten ergibt es sich z.B., an welcher Kreuzung ein Fahrer eine Straße, die sein Fahrzeug befährt, verlassen muss und in welche Richtung er abbiegen muss. Die Recheneinheit 12 führt diese Auswertung durch, erstellt einen entsprechenden Abbiegehinweis und gibt diesen bevorzugt ortsabhängig aus.

Das Kombinationsinstrument 1 weist in einem für den Benutzer nicht sichtbaren Bereich, bevorzugt hinter einer Anzeigefläche des Kombinationsinstruments 1, eine Recheneinheit 12 auf, die insbesondere der Ansteuerung der flächigen Anzeige 3 und der Berechnung der Fahranweisungen dient, die in der flächigen Anzeige 3 dargestellt werden sollen. An das Kombinationsinstrument 1 werden Fahrtroutendaten übertragen, die in einem Speicher 18 des Kombinationsinstruments 1 abgelegt werden. Bevorzugt sind in dem Speicher auch Programmdaten abgelegt, mit denen eine Ermittlung von in der flächigen Anzeige 3 darzustellenden Fahrhinweisen aus den übermittelten Fahrtroutendaten durchgeführt wird. Damit Fahranweisungen, wie z.B. ein Abbiegehinweis, an der richtigen Fahrzeugposition ausgegeben werden, verfügt das Kombinationsinstrument 1 über eine Ortungseinheit 17, die insbesondere über eine Satellitenortungsfunktion eine aktuelle Position des Fahrzeugs bestimmt, in dem das Kombinationsinstrument 1 angeordnet ist. In einer weiteren Ausführungsform kann die Ortungseinheit 17 auch einen Drehratensensor und/oder einen Richtungssensor umfassen, der eine Fahrrichtung bzw. eine Änderung der Fahrtrichtung des Fahrzeugs ermittelt. Zur Bestimmung der von dem Fahrzeug zurückgelegten Wegstrecke verfügt das Kombinationsinstrument bereits über eine von einem Wegesensor außerhalb des Kombinationsinstruments 1 bereitgestellten Information über die zurückgelegte Wegstrecke, die ebenfalls für eine Ortung mit verwendet werden kann. In einer weiteren Ausführungsform kann eine Ortungseinheit, z.B. ein externer GPS-Sensor, über eine geeignete, an dem Kombinationsinstrument 1 angeordnete Schnittstelle 19 , zum Beispiel eine USB-Schnittstelle, angeschlossen werden, so dass statt der internen Ortungseinheit 17 eine externe Ortungseinheit der Positionsbestimmung dient. Dies kann z.B. ein GPS-Sensor sein, der in eine hierfür vorgesehene Aufnahme an dem Kombinationsinstrument 1 eingeschoben wird.

Ergänzend oder alternativ zu der optischen Darstellung in der flächigen Anzeige 3 kann auch eine akustische Ausgabe von Fahrhinweisen an den Fahrer erfolgen. Bezüglich eines Abbiegevorgangs, z.B. einem Abbiegen nach rechts, könnte dann ein akustischer Hinweis "Bitte nächste Straße rechts abbiegen" über einen Lautsprecher ausgegeben werden. Die akustische Ausgabe wird ebenfalls von der Recheneinheit 12 gesteuert, wobei die akustischen Daten bevorzugt aus dem Speicher 18 abgerufen werden. In einer ersten Ausführungsform werden die akustischen Informationen über einen in das Kombinationsinstrument 1 integrierten Lautsprecher 13 ausgegeben. In einem weiteren Ausführungsbeispiel werden die akustischen Fahrhinweise über einen Lautsprecher 14 ausgegeben, der unter anderem mit dem Kombinationsinstrument 1 verbunden ist, z.B. ein Lautsprecher einer Autoradioeinheit im Fahrzeug.

Das Kombinationsinstrument 1 verfügt ferner über eine Datenschnittstelle 15, die in einer bevorzugten Ausführungsform als drahtlose Schnittstelle, vorzugsweise als eine sogenannte Blue-Tooth-Schnittstelle, ausgeführt ist. Über diese Schnittstelle können dem Kombinationsinstrument drahtlos Daten übermittelt werden.

Zur Durchführung des erfindungsgemäßen Navigationsverfahrens ist in dem hier dargestellten Ausführungsbeispiel ein Mobilfunktelefon 20 vorgesehen, das als ein mobiles, transportables Gerät, insbesondere in der Form eines sogenannten Handys, in das Fahrzeug verbracht wird. In einer weiteren, im Folgenden nicht dargestellten Ausführungsform kann das Mobilfunktelefon 20 auch als eine Mobilfunkeinrichtung in das Kombinationsinstrument 1 integriert sein oder in einer weiteren Ausführungsform als ein in das Fahrzeug eingebautes Mobilfunktelefon ausgeführt sein.

Das Mobilfunktelefon 20 weist Bedienelemente 23 auf, z.B. Bedientasten, die dazu dienen, eine Navigationsfunktion aufzurufen. Ferner weist das Mobilfunktelefon 20 eine Anzeige 24 auf, die mit den Bedienelementen 23 im Rahmen einer Auswahl- und Menüsteuerung zusammen wirkt. Über die Bedienelemente 23 wird ein Fahrziel und in einer weiteren Ausführungsform gegebenenfalls auch ein Startpunkt der Fahrt eingegeben. Bevorzugt kann das Adressbuch des Mobilfunktelefons 20 für die Zieleingabe verwendet werden, so dass als Fahrziel ein Adresseintrag ausgewählt werden kann. Ferner ist es auch möglich, unmittelbar Geokoordinaten der Navigationsziele in dem Mobilfunktelefon 20 abzulegen. Wenn kein Startpunkt eingegeben wird, so fragt das Mobilfunktelefon 20 die aktuelle Position des Fahrzeugs von dem Kombinationsinstrument 1 beziehungsweise der Ortungseinheit 17 ab. Hierzu wird eine Datenverbindung 16 zwischen dem Mobilfunktelefon 20 und dem Kombinationsinstrument 1 aufgebaut. Hierzu wirkt eine Datenschnittstelle 21 des Mobilfunktelefons 20 mit der Datenschnittstelle 15 des Kombinationsinstruments 1 zusammen. Die Datenschnittstelle 21 ist vorzugsweise ebenfalls als eine drahtlose Schnittstelle ausgeführt, z.B. eine Blue-Tooth-Schnittstelle oder eine Infrarotschnittstelle. In einem in der Zeichnung nicht dargestellten Ausführungsbeispiel kann das Mobilfunktelefon 20 auch über eine drahtgebundene Verbindung mit dem Kombinationsinstrument 1 verbunden werden. Bevorzugt wird eine Kabelverbindung zwischen dem Mobilfunktelefon über eine CAN-, MOST-, USB-, Firewire- oder serielle Schnittstelle hergestellt.

Über die Bedienelemente 23 kann entweder der Ortsname eines Zielpunktes in Buchstabenform eingegeben oder aus einer angebotenen Auswahl ausgewählt werden. Zuletzt angefahrene Fahrziele oder andere, gespeicherte Fahrziele sind hierzu in einem Speicher 26 in dem Mobilfunktelefon 20 abgelegt. Gegebenenfalls kann über ein Mikrofon 28 auch eine Spracheingabe des Fahrziels erfolgen. Über einen Lautsprecher 27 des Mobilfunktelefons 20 kann auch eine sprachliche Rückmeldung an den Benutzer erfolgen, so dass ein vollständiger, sprachgeführter Dialog mit dem Mobilfunktelefon 20 ermöglicht werden kann.

Über eine Mobilfunkschnittstelle 29 wird eine Mobilfunkverbindung 25 zu einer Dienstezentrale 30 aufgebaut. Die Mobilfunkverbindung 25 ist insbesondere als eine GSM-Verbindung ausgeführt. Über die Mobilfunkverbindung 25 wird der Startpunkt der Fahrt und das Fahrziel an die Dienstezentrale 30 übermittelt. Die Dienstezentrale 30 verfügt über eine Recheneinheit 31, die auf einen Straßenkartenspeicher 32 zugreifen kann. Gegebenenfalls werden aktuelle Verkehrsinformationen über eine Radioschnittstelle 33 und/oder über eine Verbindung zu einem Datennetz 34, z.B. dem Internet, abgerufen und bei der Berechnung einer optimalen Fahrtroute von dem Startpunkt zu dem Fahrziel berücksichtigt. Über die Mobilfunkverbindung 25 wird nun die berechnete Fahrtroute an das Mobilfunktelefon 20 übertragen und in einem Speicher 22 zwischengespeichert. In einem weiteren Ausführungsbeispiel ist es auch möglich, dass die Fahrtroutendaten von der Dienstezentrale 30 unmittelbar an das Kombinationsinstrument 1 übertragen werden das in diesem Fall über einen geeigneten Empfänger verfügt.

Von dem Mobilfunktelefon 20 werden die Fahrtroutendaten über die Datenverbindung 16 an das Kombinationsinstrument 1 übertragen. Die übertragenen Fahrtroutendaten werden bevorzugt in dem Speicher 18 abgelegt. Mittels der Recheneinheit 12 erfolgt eine Ausgabe von Fahrtrouteninformationen und/oder Fahranweisungen in der flächigen Anzeige 3 und/oder über einen Lautsprecher 13, 14. In Abhängigkeit von der aktuellen Fahrzeugposition werden hierbei die jeweils bei der jeweiligen Position des Fahrzeugs erforderlichen Fahranweisungen , z.B. akustische Ausgaben oder Grafiken, aus den Fahrtroutendaten ermittelt, für die Ausgabe vorbereitet und schließlich ausgegeben.

In einer bevorzugten Ausführungsform werden von der Dienstezentrale nicht lediglich die Daten einer Fahrtroute alleine, sondern auch Daten über die Umgebung der Fahrtroute, insbesondere Straßenkartendaten dieser Umgebung, an das Kombinationsinstrument 1 übertragen. Hierdurch ist es möglich, dass bei einem Verlassen der Fahrtroute von dem Kombinationsinstrument 1 mittels der Recheneinheit 12 Fahranweisungen berechnet werden, um den Fahrer auf einer alternativen Strecke zu seinem Fahrziel zurückzuführen. Auch kann der Fahrer wieder auf die ursprünglich berechnete Fahrtroute zurückgeführt werden, gegebenenfalls an einer anderen Position, als an der, an der er die ursprüngliche Fahrtroute verlassen hat. Die Berechnung einer derartigen alternativen Fahrtroute ist dabei möglich, ohne dass erneut eine drahtlose Verbindung zwischen dem Kombinationsinstrument 1 und der Dienstezentrale 30 aufgebaut werden muss.

Bei der Eingabe eines Fahrziels kann es zu Unklarheiten und/oder Mehrdeutigkeiten eines eingegebenen Fahrziels kommen. Hierzu wird eine Kommunikation über die Mobilfunkverbindung 25 zwischen dem Mobilfunktelefon 20 und dessen Benutzer sowie der Dienstezentrale 30 durchgeführt. Bevorzugt werden für derartige Kommunikationsabfragen Steuerungshinweise und Benutzerinformationen von der Dienstezentrale an das Mobilfunktelefon 20 übertragen.

Für die Steuerung der Navigationsfunktion können außer oder statt dem Mobilfunktelefon 20 auch weitere Eingabemittel im Fahrzeug, z.B. Lenkradtasten, zur Steuerung des Telefons und/oder einer Navigationsfunktion verwendet werden.

In einer weiteren, in der Figur nicht dargestellten Ausführungsform kann auch das Mobilfunktelefon 20 mit einer Ortungseinheit ausgestattet sein, z.B. einer Satellitenortungseinheit. Hierdurch kann auf eine Ortungseinheit in dem Kombinationsinstrument 1 verzichtet werden, wenn eine Verbindung zwischen dem Mobilfunktelefon 20 und dem Kombinationsinstrument 1 während der Fahrt vorhanden ist, so dass die Fahranweisungen ortsrichtig ausgegeben werden können.

Das Mobilfunktelefon 20 kann in einer weiteren Ausführungsform auch eine eigene Recheneinheit aufweisen, so dass es als ein sogenannter PDA (Personal Digital Assistent) ausgeführt ist. Damit kann das Mobilfunktelefon 20 weitere Funktionen, wie z.B. eine Terminverwaltung oder eine Adressverwaltung, übernehmen. Gegebenenfalls kann das Mobilfunktelefon auch in einen transportablen Rechner eingebracht sein, der z.B. in Form eines sogenannten Laptops in das Fahrzeug verbracht wird. Für derartige Laptops sind z.B. Einsteckkarten verfügbar, die eine Positionsbestimmung des Laptops über eine Satellitenortung ermöglichen.

In einer weiteren Ausführungsform kann das Mobilfunktelefon 20 und/oder das Kombinationsinstrument 1 insbesondere über die Datenschnittstellen 15, 21 sowie über andere möglichen Anschlüsse mit weiteren Fahrzeugfunktionen verbunden werden. So können z.B. die Navigationsinformationen z.B. für weitere Fahrzeugsysteme, z.B. Fahrerassistenzfunktionen, wie z.B. ein Hinweis auf eine nächste Tankstelle, mit verwendet werden. Ferner können auch andere Anzeigen im Fahrzeug, z.B. ein Head-Up-Display oder eine Anzeige in der Mittelkonsole entsprechende Informationen des Kombinationsinstruments 1 oder des Mobilfunktelefons 20 erhalten.

Durch die Übertragung von Navigationsdaten lediglich für einen Korridor um die aktuelle Fahrtroute, z.B. von etwa 15 km in beiden Richtungen, kann die Datenmenge, die in dem Kombinationsinstrument während der Durchführung der Fahrzeugnavigation zu dem Fahrziel gespeichert werden muss, reduziert werden. Insbesondere können auch Gebiete um das Fahrziel herum mit einem größeren Radius abgerufen werden. Je nach Ausführung des Speichers 18 können dabei eine Mehrzahl von Fahrtrouten bzw. Fahrtroutengebieten abgelegt werden, so dass das Datenvolumen einer Übertragung von der Datenzentrale an das Kombinationsinstrument 1 gegebenenfalls reduziert werden kann. Fahrtrouten, die bereits einmal von der Dienstezentrale 30 übermittelt wurden, können in einer ersten Ausführungsform in dem Mobilfunktelefon 20 zu einer entsprechenden Zieladresse abgespeichert werden, so dass bei einer wiederholten Zielauswahl die Daten aus dem Speicher 22 des Mobilfunktelefons 20 direkt in das Kombinationsinstrument 1 übertragen werden können, ohne dass eine neue Anfrage bei einem Diensteanbieter erfolgen muss. In einer weiteren Ausführungsform können bereits übertragene Navigationsdaten und/oder Fahrtroutendaten auch in einem Speicher des Kombinationsinstruments 1 permanent abgespeichert werden. Eine geeignete Software in dem Kombinationsinstrument 1 erkennt bei einer Auswahl eines Ziels, ob die Route bereits in dem Speicher des Mobilfunktelefons oder des Kombinationsinstruments 1 vorliegt und startet eine Abfrage an die Dienstezentrale 30 nur dann, wenn eine Fahrtroute in dem Speicher nicht bereits vorhanden ist. Damit können Übertragungskosten für die Datenübertragung gespart werden. Gegebenenfalls erfolgt lediglich eine Plausibilitätsprüfung des Datenstands. Der Speicher 18 ist insbesondere hierfür als ein nichtflüchtiger Speicher ausgeführt. In einer weiteren Ausführungsform kann bei einem Verlassen des Routenkorridors, der dem Kombinationsinstrument 1 von der Dienstezentrale 30 zur Verfügung gestellt wurde, automatisch eine Neuberechnung einer Fahrtroute von der Dienstezentrale 30 angefordert werden.

Die Fahrtroutendaten, bzw. die Fahrtroutendaten einschließlich der Daten um den Korridor herum werden bevorzugt als Vektordaten an das Kombinationsinstrument 1 übertragen. Alternativ ist eine Übertragung von Skriptdaten z.B. im XML- oder HTML-Format möglich. Neben den Fahrtroutendaten können auch Programmdaten zur Durchführung der Navigationsfunktion in der Recheneinheit 12 an das Kombinationsinstrument 1 übertragen werden.

Die Abrechnung für die Nutzung der Dienstezentrale erfolgt bevorzugt über eine Abrechnung für die Mobilfunkverbindung 25. In einer weiteren Ausführungsform ist es möglich, die Navigationsfunktion als solche über ein Eingeben einer entsprechenden Codenummer oder über eine entsprechend von einer Dienstezentrale beantragten Freischaltung mittels des Mobilfunktelefons 20 freizuschalten, so dass nur dann die Navigationsfunktion zur Verfügung steht, wenn hierfür eine Zahlung geleistet wird. Dies bietet den Vorteil, das die Navigationsfunktion nicht bezahlt zu werden braucht, wenn sie vom Benutzer nicht benötigt wird, sie aber dennoch auf Anfrage unmittelbar bereitsteht.

## Patentansprüche

1. Verfahren zur Fahrzeugnavigation, wobei eine Übertragung von Fahrtroutendaten über ein Mobilfunktelefon (20) von einer Dienstezentrale (30) angefordert wird, wobei Fahrtroutendaten von der Dienstezentrale (30) an ein Kombinationsinstrument (1) in einem Fahrzeug übermittelt werden, wobei ein Fahrziel über Bedienelemente (23) des Mobilfunktelefons (20) zur Übermittlung an die Dienstezentrale (30) zur Fahrtroutenberechnung durch die Dienstezentrale (30) eingegeben wird und wobei in dem Kombinationsinstrument (1) anhand der übermittelten Fahrtroutendaten Fahrhinweise (7, 8) zur Ausgabe an den Fahrer ermittelt werden , **dadurch gekennzeichnet, dass** die Fahrhinweise des Fahrzeugs in einer Anzeigeeinheit (3) des Kombinationsinstruments (1) dargestellt werden und dass mit dem Kombinationsinstrument (1) die aktuelle Fahrzeuggeschwindigkeit ausgegeben wird,

2. Verfahren nach Anspruch 1, **dadurch gekennzeichnet, dass** die Fahrtroutendaten von der Mobilfunkvorrichtung (20) empfangen und über eine vorzugsweise drahtlose Datenverbindung (16) an das Kombinationsinstrument (1) übertragen werden.

3. Verfahren nach einem der vorherigen Ansprüche, **dadurch gekennzeichnet, dass** mit den Fahrtroutendaten Navigationsdaten zur Rückführung des Fahrzeugs auf die Fahrtroute an das Kombinationsinstrument (1) übertragen werden.

4. Verfahren nach einem der vorherigen Ansprüche, **dadurch gekennzeichnet, dass** eine aktuelle Position des Fahrzeugs mit einer Ortungseinheit (17) bestimmt wird und dass die Fahranweisungen in Abhängigkeit von der aktuellen Position ausgegeben werden.

## Claims

1. Method for vehicle navigation, wherein transfer of journey route data is requested from a service control centre (30) using a mobile radio telephone (20), wherein journey route data are transmitted from the service control centre (30) to a combination instrument (1) in a vehicle, wherein a journey destination is input using operator control elements (23) on the mobile radio telephone (20) for the purpose of transmission to the service control centre (30) for the purpose of journey route calculation by the service control centre (30) and wherein the transmitted journey route data are used in the combination instrument (1) to ascertain driving advice (7, 8) for output to the driver, **characterized in that** the driving advice from the vehicle is presented in a display unit (3) of the combination instrument (1) and **in that** the combination instrument (1) is used to output the current vehicle speed.

2. Method according to Claim 1, **characterized in that** the journey route data are received by the mobile radio apparatus (20) and are transferred to the combination instrument (1) via a preferably wireless data link (16).

3. Method according to one of the preceding claims, **characterized in that** navigation data for returning the vehicle to the journey route are transferred to the combination instrument (1) with the journey route data.

4. Method according to one of the preceding claims, **characterized in that** a current position for the vehicle is determined using a position-finding unit (17) and **in that** the driving instructions are output on the basis of the current position.

## Revendications

1. Procédé de navigation pour un véhicule, dans lequel un transfert de données d'itinéraire est demandé à une centrale de service (30) par l'intermédiaire d'un radiotéléphone mobile (20), les données d'itinéraire étant transmises par la centrale de service (30) à un instrument combiné (1) prévu dans le véhicule, la destination étant introduite par des éléments d'actionnement (23) du radiotéléphone mobile (20) en vue d'être transmise à la centrale de service (30) pour que la centrale de service (30) calcule l'itinéraire, des indications de conduite (7, 8) destinées à être délivrées au conducteur étant déterminées dans l'instrument combiné (1) à l'aide des données d'itinéraire transmises,
**caractérisé en ce que**
les indications de conduite du véhicule sont présentées sur une unité d'affichage (3) de l'instrument combiné (1) et
**en ce que** la vitesse effective du véhicule est délivrée par l'instrument combiné (1).

2. Procédé selon la revendication 1, **caractérisé en ce que** les données d'itinéraire sont reçues par le dispositif (20) de radiotéléphonie mobile et sont transmises à l'instrument combiné (1) par une liaison de données (16) de préférence sans fil.

3. Procédé selon l'une des revendications précédentes, **caractérisé en ce qu'**avec les données d'itinéraire, des données de navigation qui permettent de ramener le véhicule sur l'itinéraire sont transmises à l'instrument combiné (1).

4. Procédé selon l'une des revendications précédentes, **caractérisé en ce que** la position effective du véhicule est déterminée à l'aide d'une unité de localisation (17) et **en ce que** les indications de conduite sont délivrées en fonction de la position effective.
